(19) Europäisches Patentamt
European Patent Office
Office européen des brevets

(11) **EP 1 139 749 B1**

(12) **EUROPÄISCHE PATENTSCHRIFT**

(45) Veröffentlichungstag und Bekanntmachung des Hinweises auf die Patenterteilung:
**02.05.2003 Patentblatt 2003/18**

(21) Anmeldenummer: **99967931.9**

(22) Anmeldetag: **11.12.1999**

(51) Int Cl.[7]: **A01N 37/52**, A01N 43/10, A01N 43/56
// (A01N43/56, 43:84, 43:40), A01N43:30,(A01N43/10, 43:84, 43:40), A01N43:30,(A01N37/52, 43:84, 43:40), A01N43:30

(86) Internationale Anmeldenummer:
**PCT/EP99/09803**

(87) Internationale Veröffentlichungsnummer:
**WO 00/036917 (29.06.2000 Gazette 2000/26)**

(54) **FUNGIZIDE MISCHUNGEN AUF DER BASIS VON MORPHOLIN- BZW. PIPERIDINDERIVATEN UND OXIMETHERDERIVATEN**

FUNGICIDE MIXTURES WHICH ARE BASED ON DERIVATIVES OF MORPHOLINE OR PIPERIDINE AND DERIVATIVES OF OXIME ETHER

MELANGES FONGICIDES A BASE DE DERIVES DE MORPHOLINE OU DE PIPERIDINE ET DE DERIVES D'ETHER-OXIME

(84) Benannte Vertragsstaaten:
**AT BE CH CY DE DK ES FI FR GB GR IE IT LI LU MC NL PT SE**
Benannte Erstreckungsstaaten:
**SI**

(30) Priorität: **19.12.1998 DE 19858911**

(43) Veröffentlichungstag der Anmeldung:
**10.10.2001 Patentblatt 2001/41**

(73) Patentinhaber: **BASF AKTIENGESELLSCHAFT**
**67056 Ludwigshafen (DE)**

(72) Erfinder:
- **SCHELBERGER, Klaus**
  **D-67161 Gönnheim (DE)**
- **SCHERER, Maria**
  **D-76829 Landau (DE)**
- **SAUR, Reinhold**
  **D-67459 Böhl-Iggelheim (DE)**
- **EICKEN, Karl**
  **D-67157 Wachenheim (DE)**
- **HADEN, Egon**
  **D-67259 Kleinniedesheim (DE)**
- **AMMERMANN, Eberhard**
  **D-64646 Heppenheim (DE)**
- **GROTE, Thomas**
  **D-67105 Schifferstadt (DE)**
- **LORENZ, Gisela**
  **D-67434 Neustadt (DE)**
- **STRATHMANN, Siegfried**
  **D-67117 Limburgerhof (DE)**

(56) Entgegenhaltungen:
**EP-A- 0 281 842**
**EP-A- 0 919 126**
**WO-A-97/06681**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 139 749 B1

Printed by Jouve, 75001 PARIS (FR)

## Beschreibung

Die vorliegende Erfindung betrifft fungizide Mischungen zur Bekämpfung von Schadpilzen sowie Verfahren zur Bekämpfung von Schadpilzen unter Anwendung derartiger Mischungen.

Gegenstand der WO 97/40673 sind fungizide Mischungen, die u.a. Wirkstoffe der Formeln Ia, Ib und/oder Ic neben anderen fungiziden Wirkstoffen aus der Gruppe der Oximether und/oder der Carbamate enthalten.

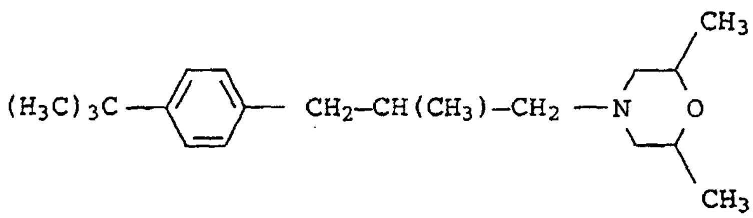

(Ia)

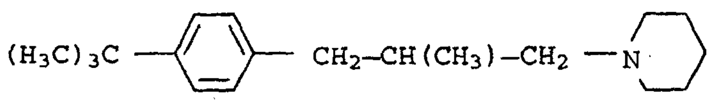

(Ib)

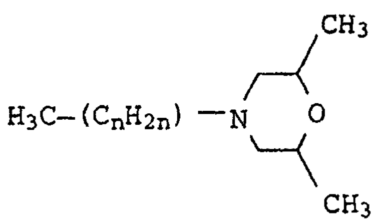

(Ic)

[n= 10,11,12 (60 - 70 %) oder 13]

Weitere fungizide Mischungen, die Wirkstoffe der Formeln Ia bis Ic enthalten, sind aus den EP-A 797386, WO 97/06681, EP-B 425857, EP-B 524496, EP-A 690792, WO 94/22308 und EP-B 645087 bekannt.

Aus Brighton Crop Protection Conference 1996, Pests and Diseases, S. 47-52 ist der Wirkstoff der Formel Id bekannt:

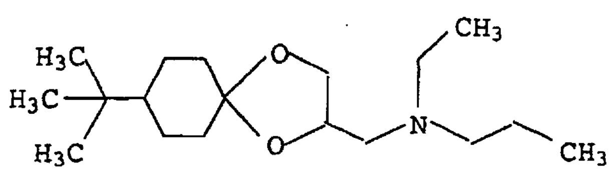

Id

In der DE 19722223 werden Mischungen aus Verbindungen der Formel II und Wirkstoffen aus der Klasse der Strobilurine beschrieben.

Der vorliegenden Erfindung lag die Aufgabe zugrunde, weitere besonders wirksame Mischungen zur Bekämpfung von Schadpilzen und insbesondere für bestimmte Indikationen zur Verfügung zu stellen.

Überraschenderweise wurde nun gefunden, daß diese Aufgabe mit einer Mischung gelöst wird, welche als Wirkstoffe Morpholin- oder Piperidinderivate der eingangs definierten Formel I und als weitere fungizid wirksame Komponente mindestens einen fungiziden Wirkstoffder Formel II

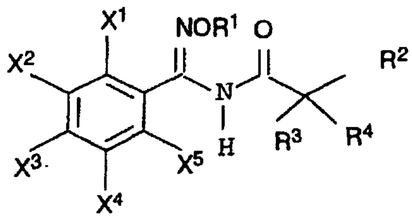

(II)

wobei die Substituenten $X^1$ bis $X^5$ und $R^1$ bis $R^4$ folgende Bedeutung haben:

$X^1$ — $C_1$-$C_4$-Halogenalkyl, $C_1$-$C_4$-Halogenalkoxy oder Halogen

$X^2$ bis $X^5$ — unabhängig voneinander Wasserstoff, Halogen, $C_1$-$C_4$-Alkyl, $C_1$-$C_4$-Halogenalkyl, $C_1$-$C_4$-Alkoxy oder $C_1$-$C_4$-Halogenalkoxy;

$R^1$ — $C_1$-$C_4$-Alkyl, $C_2$-$C_6$-Alkenyl, $C_2$-$C_6$-Alkinyl, $C_1$-$C_4$-Alkyl-$C_3$-$C_7$-Cycloalkyl, wobei diese Reste Substituenten ausgewählt aus Halogen, Cyano, und $C_1$-$C_4$-Alkoxy tragen können

$R^2$ — einen Phenylrest oder einen 5- oder 6-gliedrigen gesättigten oder ungesättigten Heterocyclylrest mit mindestens einem Heteroatom ausgewählt aus der Gruppe N, O und S, wobei die cyclischen Reste einen bis drei Substituenten ausgewählt aus der Gruppe aus Halogen, $C_1$-$C_4$-Alkyl, $C_1$-$C_4$-Alkoxy, $C_1$-$C_4$-Halogenalkyl, $C_1$-$C_4$-Halogenalkoxy, $C_1$-$C_4$-Alkoxy-$C_2$-$C_4$-Alkenyl, $C_1$-$C_4$-Alkoxy-$C_2$-$C_4$-Alkinyl aufweisen können,

$R^3$ und $R^4$ — unabhängig voneinander Wasserstoff, $C_1$-$C_4$-Alkyl, $C_1$-$C_4$-Alkoxy, $C_1$-$C_4$-Alkylthio, N-$C_1$-$C_4$-Alkylamino, $C_1$-$C_4$-Halogenalkyl oder $C_1$-$C_4$-Halogenalkoxy

in einer synergistisch wirksamen Menge enthält.

Die erfindungsgemäßen Mischungen wirken synergistisch und sind daher zur Bekämpfung von Schadpilzen und insbesondere von echten Mehltaupilzen besonders geeignet.

Im Rahmen der vorliegenden Erfindung steht Halogen für Fluor, Chlor, Brom und Jod und insbesondere für Fluor, Chlor und Brom.

Der Ausdruck "Alkyl" umfaßt geradkettige und verzweigte Alkylgruppen. Vorzugsweise handelt es sich dabei um geradkettige oder verzweigte $C_1$-$C_{12}$-Alkyl- und insbesondere $C_1$-$C_6$-Alkylgruppen. Beispiele für Alkylgruppen sind Alkyl wie insbesondere Methyl, Ethyl, Propyl, 1-Methylethyl, Butyl, 1-Methylpropyl, 2-Methylpropyl 1,1-Dimethylethyl, n-Pentyl, 1-Methylbutyl, 2-Methylbutyl, 3-Methylbutyl, 1,2-Dimethylpropyl, 1,1-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 3,3-Dimethylbutyl, 1,1,2-Trimethylpropyl, 1,2,2-Trimethylpropyl, 1-Ethylbutyl, 2-Ethylbutyl, 1-Ethyl-2-methylpropyl, n-Heptyl, 1-Methylhexyl, 1-Ethylpentyl, 2-Ethylpentyl, 1-Propylbutyl, Octyl, Decyl, Dodecyl.

Halogenalkyl steht für eine wie oben definierte Alkylgruppe, die mit einem oder mehreren Halogenatomen, insbesondere Fluor und Chlor, teilweise oder vollständig halogeniert ist. Vorzugsweise sind 1 bis 3 Halogenatome vorhanden, wobei die Difluormethan/oder die Trifluormethylgruppe besonders bevorzugt ist.

Die Alkenylgruppe umfaßt geradkettige und verzweigte $C_2$-$C_6$-Alkenylgruppen. Beispiele für Alkenylgruppen sind 2-Propenyl, 2-Butenyl, 3-Butenyl, 1-Methyl-2-propenyl, 2-Methyl-2-propenyl, 2-Pentenyl, 3-Pentenyl, 4-Pentenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-2-propenyl, 1-Ethyl-2-propenyl, 2-Hexenyl, 3-Hexenyl, 4-Hexenyl, 5-Hexenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,1-Dimethyl-3-butenyl, 1,2-Dimethyl-2-butenyl, 1,2-Dimethyl-3-butenyl, 1,3-Dimethyl-2-butenyl, 1,3-Dimethyl-3-butenyl, 2,2-Dimethyl-3-butenyl, 2,3-Dimethyl-2-butenyl, 2,3-Dimethyl-3-butenyl, 1-Ethyl-2-butenyl, 1-Ethyl-3-butenyl, 2-Ethyl-2-butenyl, 2-Ethyl-3-butenyl, 1,1,2-Trimethyl-2-propenyl, 1-Ethyl-1-methyl-2-propenyl und 1-Ethyl-2-methyl-2-propenyl, insbesondere 2-Propenyl,

2-Butenyl, 3-Methyl-2-butenyl und 3-Methyl-2-pentenyl.

Die Alkenylgruppe kann mit einem oder mehreren Halogenatomen, insbesondere Fluor und Chlor, partiell oder vollständig halogeniert sein. Vorzugsweise weist sie 1 bis 3 Halogenatome auf.

Die Alkinylgruppe umfaßt geradkettige und verzweigte $C_3$-$C_6$-Alkinylgruppen. Beispiele für Alkinylgruppen sind 2-Propinyl, 2-Butinyl, 3-Butinyl, 1-Methyl-2-propinyl, 2-Pentinyl, 3-Pentinyl, 4-Pentinyl, 1-Methyl-3-butinyl, 2-Methyl-3-butinyl, 1-Methyl-2-butinyl, 1,1-Dimethyl-2-propinyl, 1-Ethyl-2-propinyl, 2-Hexinyl, 3-Hexinyl, 4-Alkinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-4-pentinyl, 4-Methyl-2-pentinyl, 1,2-Dimethyl-2-butinyl, 1,1-Dimethyl-3-butinyl, 1,2-Dimethyl-3-butinyl, 2,2-Dimethyl-3-butinyl, 1-Ethyl-2-butinyl, 1-Ethyl-3-butinyl, 2-Ethyl-3-butinyl und 1-Ethyl-l-methyl-2-propinyl.

Bei der $C_1$-$C_4$-Alkylen-$C_3$-$C_7$-Cycloalkylgruppe handelt es sich um eine $C_3$-$C_7$-Cycloalkylgruppe, wie Cyclopropyl, Cyclobutyl, Cyclopentyl oder Cyclohexyl, die über einen $C_1$-$C_4$-Alkylenrest gebunden ist.

Als Substituenten $R^2$ sind neben Phenyl (ggf. substituiert) insbesondere Thienyl, Pyrazolyl, Pyrrolyl, Imidazolyl, Thiazolyl, Furyl, Pyridazinyl und Pyrimidinyl zu nennen. Bevorzugte Substituenten an diesen Ringsystemen sind Halogen (insbesondere F und Cl), $C_1$-$C_4$-Alkoxy (insbesondere Methoxy) und $C_1$-$C_4$-Alkyl (insbesondere Methyl, Ethyl). Die Zahl der Ringsubstituenten kann 1 bis 3, insbesondere 1 bis 2 betragen. Phenyl oder substituiertes Phenyl, Thienyl, Thienyl-$C_1$-$C_4$-Alkyl, Pyrazolyl und Pyrazol-$C_1$-$C_4$-Alkyl werden besonders bevorzugt.

Bei den Substuituenten $R^3$ und $R^4$ handelt es sich um $C_1$-$C_4$-Alkyl, $C_1$-$C_4$-Alkoxy, $C_1$-$C_4$-Alkylthio, N-$C_1$-$C_4$-Alkylamino, $C_1$-$C_4$-Halogenalkyl oder $C_1$-$C_4$-Halogenalkoxy. Bevorzugte Substituenten $R^3$ und $R^4$ sind Wasserstoff, F, Cl, Methyl, Ethyl, Methoxy, Thiomethyl und N-Methylamino. $R^3$ und $R^4$ können auch zusammen eine Gruppierung =0 bilden.

Die Morpholin- bzw. Piperidinderivate I (Ia: common name: Fenpropimorph, US-A 4,202,894; Ib: common name: Fenpropidin, US-A 4,202,894; Ic: common name: Tridemorph, DE-A 11 64 152), deren Herstellung und deren Wirkung gegen Schadpilze sind bekannt und als kommerzielle Produkte erhältlich.

Die Verbindungen der Formel Id, deren Herstellung und ihre Wirkung gegen Schadpilze sind aus EP-A 281 842 bekannt.

Die Verbindungen der Formel II sowie Verfahren zu deren Herstellung sind in der WO-A 96/19442 und den älteren Anmeldungen DE 1 97 41098.7 und 1 97 41099.5 beschrieben.

Synergistische Mischungen von Verbindungen der Formel II mit Wirkstoffen vom Strobilurin-Typ sind in EP-A 919 126 offenbart.

Unter den Verbindungen der Formel II sind solche bevorzugt, bei denen $X^1$ eine $C_1$-$C_4$-Halogenalkyl, insbesondere eine Trifluormethylgruppe, eine $C_1$-$C_4$-Halogenalkoxy, insbesondere eine Difluormethoxy oder Trifluormethoxygruppe oder ein Halogen, insbesondere Chlor und $X^2$ und $X^3$ ein Wasserstoffatom oder eine Halogengruppe, insbesondere ein Wasserstoffatom darstellen. $X^4$ und $X^5$ sind bevorzugt Wasserstoff, Halogen (insbesondere Cl oder F), $c_1$-$C_4$-Alkoxy (insbesondere Methoxy oder Ethoxy), $C_1$-$C_4$-Halogenalkyl (insbesondere Trifluormethyl) oder $C_1$-$C_4$-Halogenalkoxy (insbesondere Trifluormethoxy).

Als Substituenten $R^1$ werden $C_1$-$C_4$-Alkyl (Methyl, Ethyl, n- und i-Propyl und t-Butyl), $C_1$-$C_4$-Alkylen-$C_3$-$C_7$-Cycloalkyl, $C_1$-$C_4$-Alkenyl (insbesondere Ethenyl, Propenyl und Butenyl, die insbesondere mit Halogen (vorzugsweise Cl) substituiert sein können), Propinyl, Cyanomethyl und Methoxymethyl bevorzugt. Unter den $C_1$-$C_4$-Alkylen-$C_3$-$C_7$-Cycloalkylsubstituenten sind insbesondere methylensubstituierte Verbindungen, insbesondere Methylencyclopropyl, Methylencyclopentyl, Methylencyclohexyl und Methylencyclohexenyl bevorzugt. Die Ringe in diesen Substituenten können vorzugsweise mit Halogen substituiert sein.

Als Substituenten $R^2$ sind neben Phenyl (ggf. substituiert) insbesondere Thienyl, Pyrazolyl, Pyrrolyl, Imidazolyl, Thiazolyl, Furyl, Pyridazinyl und Pyrimidinyl zu nennen. Bevorzugte Substituenten an diesen Ringsystemen sind Halogen (insbesondere F und Cl), $C_1$-$C_4$-Alkoxy (insbesondere Methoxy) und $C_1$-$C_4$-Alkyl (insbesondere Methyl, Ethyl). Die Zahl der Ringsubstituenten kann 1 bis 3, insbesondere 1 bis 2 betragen. Phenyl oder substituiertes Phenyl wird besonders bevorzugt.

Bevorzugte Verbindungen der Formel II sind den Tabellen der bereits erwähnten WO 96/19442 zu entnehmen. Von diesen wiederum sind insbesondere die in der nachfolgenden Tabelle 1 aufgeführten Verbindungen besonders bevorzugt ($R^3$ und $R^4$ sind jeweils Wasserstoff).

Tabelle 1:

| Nr. | $X^1$ | $X^2$ | $X^3$ | $X^4$ | $X^5$ | $R^1$ | $R^2$ |
|---|---|---|---|---|---|---|---|
| II.1 | $CF_3$ | H | H | H | H | Ethyl | Ph-4-OMe |
| II.2 | $CF_3$ | H | H | H | H | Methyl | Ph-4-OMe |
| II.3 | $CF_3$ | H | H | H | H | $-CH_2$-cPr | 2-Thienyl |

Tabelle 1: (fortgesetzt)

| Nr. | $X^1$ | $X^2$ | $X^3$ | $X^4$ | $X^5$ | $R^1$ | $R^2$ |
|---|---|---|---|---|---|---|---|
| II.4 | $CF_3$ | H | H | H | H | $-CH_2$-cPr | 3-Thienyl |
| II.5 | $CF_3$ | H | H | H | H | $-CH_2$-cPr | Ph-2,4-$F_2$ |
| II.6 | $CF_3$ | H | H | H | H | $-CH_2$-cPr | Ph-2-F |
| II.7 | $CF_3$ | H | H | H | H | $-CH_2$-cPr | Ph-2-F-4-OMe |
| II.8 | $CF_3$ | H | H | H | H | $-CH_2$-cPr | Ph-3-Me |
| II.9 | $CF_3$ | H | H | H | H | $-CH_2$-CPr | Ph-3-Me-4-OMe |
| II.10 | $CF_3$ | H | H | H | H | $-CH_2$-cPr | Ph-4-F |
| II.11 | $CF_3$ | H | H | H | H | $-CH_2$-cPr | Ph-4-Me |
| II.12 | $CF_3$ | H | H | H | H | $-CH_2$-cPr | Ph-4-OMe |
| II.13 | $CF_3$ | H | H | H | H | $-CH_2$-cPr | Ph |
| II.14 | $CF_3$ | H | H | H | H | $-CH_2-CH=CH_2$ | Ph |
| II.15 | $CF_3$ | H | H | H | H | $-CH_2-CH=CH_2$ | Ph-4-OMe |
| II.16 | $CF_3$ | H | H | H | H | $-CH_2-CH=CCl_2$ | Ph-4-OMe |
| II.17 | $CF_3$ | H | H | H | F | $-CH_2-CH_3$ | Ph-4-OMe |
| II.18 | $CF_3$ | H | H | H | F | $-CH_2CH_3$ | Ph |
| II.19 | $CF_3$ | H | H | H | F | $-CH_3$ | Ph-4-OMe |
| II.20 | $CF_3$ | H | H | H | F | $-CH_2$-cPr | Ph |
| II.21 | $CF_3$ | H | H | H | F | $-CH_2$-cPr | Ph-2-F |
| II.22 | $CF_3$ | H | H | H | F | $-CH_2$-cPr | Ph-2,4-$F_2$ |
| II.23 | $CF_3$ | H | H | H | F | $-CH_2$-cPr | Ph-2-F-3-Me |
| II.24 | $CF_3$ | H | H | H | F | $-CH_2$-cPr | Ph-2-F-4-OMe |
| II.25 | $CF_3$ | H | H | H | F | $-CH_2$-cPr | Ph-3,5-$Me_2$ |
| II.26 | $CF_3$ | H | H | H | F | $-CH_2$-cPr | 3-Methyl-pyrazol-1-yl |
| II.27 | $CF_3$ | H | H | H | F | $-CH_2$-cPr | 3-Methyl-2-thienyl |
| II.28 | $CF_3$ | H | H | H | F | $-CH_2$-cPr | 2-Thienyl |
| II.29 | $CF_3$ | H | H | H | F | $-CH_2$-cPr | 3-Thienyl |
| II.30 | $CF_3$ | H | H | H | F | $-CH_2-CHF_2$ | Ph-4-OMe |
| II.31 | $CF_3$ | H | H | H | F | $-CH_2-OCH_3$ | Ph-4-OMe |
| II.32 | $CF_3$ | H | H | H | F | $-CH_2-OCH_3$ | Ph |
| II.33 | $CF_3$ | H | H | H | F | $-CH_2CN$ | Ph-4-Ome |
| II.34 | $CF_3$ | H | H | H | F | $-CH_2CN$ | Ph |
| II.35 | $CF_3$ | H | H | H | F | $-CH_2-C\equiv CH$ | Ph |
| II.36 | $CF_3$ | H | H | H | F | $-CH_2-C\equiv CH$ | Ph-4-OMe |
| II.37 | $CF_3$ | H | H | H | F | $-CH_2-C\equiv CH$ | Ph-2-F |
| II.38 | $CF_3$ | H | H | H | F | $-CH_2-C\equiv CH$ | Ph-4-Me |
| II.39 | $CF_3$ | H | H | H | F | $-CH_2-C\equiv CH$ | 2-Thienyl |
| II.40 | $CF_3$ | H | H | H | F | $-CH_2-C\equiv CH$ | Ph-2-F-4-OMe |
| II.41 | $CF_3$ | H | H | H | F | i-Propyl | Ph |

Tabelle 1: (fortgesetzt)

| Nr. | $X^1$ | $X^2$ | $X^3$ | $X^4$ | $X^5$ | $R^1$ | $R^2$ |
|---|---|---|---|---|---|---|---|
| II.42 | $CF_3$ | H | H | H | F | n-Butyl | Ph |
| II.43 | $CF_3$ | H | H | H | F | n-Propyl | Ph |
| II.44 | $CF_3$ | H | H | H | F | t-Butyl | Ph |
| II.45 | $CF_3$ | H | H | H | Cl | $-CH_3$ | |
| II.46 | $CF_3$ | H | H | H | Cl | $-CH_2CN$ | Ph-4-OMe |
| II.47 | $CF_3$ | H | H | H | Cl | $-CH_2$-OMe | Ph-4-OMe |
| II.48 | $CF_3$ | H | H | H | Cl | $-CH_2$-CPr | Ph |
| II.49 | $CF_3$ | H | H | H | Cl | $-CH_2$-cPr | 3-Methyl-pyrazol-1-yl |
| II.50 | $CF_3$ | H | H | H | Cl | $-CH_2$-cPr | 2-Thienyl |
| II.51 | $CF_3$ | H | H | H | Cl | $-CH_2$-cPr | Ph-2,4-$F_2$ |
| II.52 | $CF_3$ | H | H | H | Cl | $-CH_2-C\equiv CH$ | Ph-4-OMe |
| II.53 | $CF_3$ | H | H | H | $CF_3$ | $-CH_3$ | Ph-4-OMe |
| II.54 | $CF_3$ | H | H | H | $CF_3$ | $-CH_2CH_2Cl$ | Ph-4-OMe |
| II.55 | $CF_3$ | H | H | H | $CF_3$ | $-CH_2$-cPr | 2-Thienyl |
| II.56 | $CF_3$ | H | H | H | $CF_3$ | $-CH_2$-cPr | Ph-2-F-5-Me |
| II.57 | $CF_3$ | H | H | H | $CF_3$ | $-CH_2$-cPr | Ph-4-OMe |
| II.58 | $CF_3$ | H | H | H | $CF_3$ | $-CH_2$-CPr | Ph |
| II.59 | $CF_3$ | H | H | H | $OCH_3$ | $-CH_2CH_3$ | Ph-4-OMe |
| II.60 | $CF_3$ | H | H | H | $OCH_3$ | $-CH_2$-cPr | Ph-4-OMe |
| II.61 | $CF_3$ | H | H | H | $OCH_3$ | $-CH_2$-cPr | Ph |
| II.62 | $CF_3$ | H | H | Cl | F | $-CH_2-CH_2Cl$ | Ph |
| II.63 | $CF_3$ | H | H | Cl | F | $-CH_2-CH=CH_2$ | Ph-4-OMe |
| II.64 | $CF_3$ | H | H | Cl | F | $-CH_2$-cPr | 2-Thienyl |
| II.65 | $CF_3$ | H | H | Cl | F | $-CH_2$-cPr | Ph-2-F |
| II.66 | $CF_3$ | H | H | Cl | F | $-CH_2$-cPr | Ph |
| II.67 | $CF_3$ | H | H | Cl | F | $-CH_2$-cPr | Ph-2-F-5-Me |
| II.68 | $CF_3$ | H | H | Cl | Cl | $-CH_2-CH=CH_2$ | Ph-4-OMe |
| II.69 | $CF_3$ | H | H | Cl | Cl | $-CH_2CH_2Cl$ | Ph |
| II.70 | $CF_3$ | H | H | Cl | Cl | $-CH_2CH_3$ | Ph-2-F-5-Me |
| II.71 | $CF_3$ | H | H | Cl | Cl | $-CH_2$-cPr | Ph-3,5-$Me_2$ |
| II.72 | $CF_3$ | H | H | $SCH_3$ | F | $-CH_2$-cPr | Ph-4-OMe |
| II.73 | $CF_3$ | H | H | $OCH_3$ | F | $-CH_2$-cPr | Ph-4-OMe |
| II.74 | $CF_3$ | H | F | H | H | $-CH_2$-cPr | Ph |
| II.75 | $CF_3$ | H | F | H | H | $-CH_2-CH_3$ | Ph-4-OMe |
| II.76 | $CF_3$ | H | H | F | F | $-CH_2CH_3$ | Ph |
| II.77 | $CF_3$ | H | H | F | F | $-CH_2-CH_2Cl$ | Ph-2-F-5-Me |
| II.78 | $CF_3$ | H | H | F | F | $-CH_2-OCH_3$ | Ph-4-OMe |
| II.79 | $CF_3$ | H | H | F | F | $-CH_2$-cPr | Ph |

Tabelle 1: (fortgesetzt)

| Nr. | $X^1$ | $X^2$ | $X^3$ | $X^4$ | $X^5$ | $R^1$ | $R^2$ |
|---|---|---|---|---|---|---|---|
| II.80 | $CF_3$ | H | H | F | F | $-CH_2$-cPr | 3-Methyl-pyrazol-1-yl |
| II.81 | $CF_3$ | H | H | F | F | $-CH_2$-cPr | 3-Methyl-2-thienyl |
| II.82 | $CF_3$ | H | H | F | F | $-CH_2$-cPr | Ph-2-F-3-Me |
| II.83 | $CF_3$ | H | H | F | F | $-CH_2$-cPr | Ph-2-F-4-OMe |
| II.84 | $CF_3$ | H | H | F | F | $-CH_2$-cPr | Ph-2-F-5-Me |
| II.85 | $CF_3$ | H | H | F | F | $-CH_2$-cPr | Ph-4-OMe |
| II.86 | $CF_3$ | H | H | F | F | $-CH_2$-cPr | Ph-4F |
| II.87 | $CF_3$ | H | H | F | F | i-Propyl | Ph-4-OMe |
| II.88 | $CF_3$ | H | H | F | F | n-Butyl | Ph-4-OMe |
| II.89 | $CF_3$ | H | H | F | F | $-CH_2-C{\equiv}CH$ | Ph-4-OMe |
| II.90 | $CF_3$ | H | H | $CF_3$ | F | $-CH_3$ | Ph-4-OMe |
| II.91 | $CF_3$ | H | H | $CF_3$ | F | $-CH_2-CH=CH_2$ | Ph |
| II.92 | $CF_3$ | H | H | $CF_3$ | F | $-CH_2$-cPr | Ph |
| II.93 | $CF_3$ | H | H | Cl | Cl | $-CH_2$-CHxe-3 | Ph |
| II.94 | $CF_3$ | H | H | F | H | $-CH_2$-cPr | Ph-4-F |
| II.95 | $CF_3$ | H | H | Cl | Cl | $-CH_2$-cHex | Ph |
| II.96 | $CF_3$ | H | H | H | F | $-CH_2-SCH_3$ | Ph |
| II.97 | $CF_3$ | H | H | H | F | $-CH_2-SOCH_3$ | Ph |
| II.98 | $CF_3$ | H | H | H | F | $-CH_2-SO_2CH_3$ | Ph |
| II.99 | $CF_3$ | H | H | H | F | $-CH_2$-NHMe | Ph |
| II.100 | $CF_3$ | H | H | H | F | $CH_2-CONH_2$ | Ph |
| II.101 | $CF_3$ | H | H | H | F | $CH_2CON(CH_3)_2$ | Ph |

In der vorstehenden Tabelle steht cPr für Cyclopropyl, cHxe-n für in Position n ungesättigtes Cyclohexenyl, c-Hex für Cyclohexyl und Ph für Phenyl.

Besonders bevorzugt werden Verbindungen II, in denen $R^1$ für einen Rest $CH_2$-cPr und $R^2$ für einen ggf. substituierten Phenylrest steht. Von diesen wiederum bevorzugt sind die Verbindungen, in denen $X^4$ und X5 Halogen, vorzugsweise F, bedeuten.

Weitere bevorzugte Verbindungen der Formel II ergeben sich aus den nachstehenden Tabellen 2 und 3.

Tabelle 2: Verbindungen der Formel II'

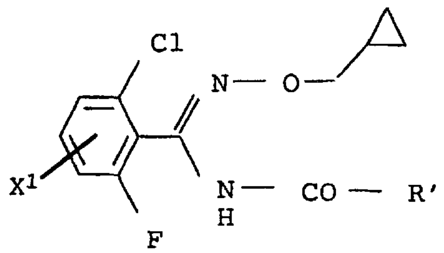

(II')

wobei die Substituenten die folgenden Bedeutungen haben:

| Nr. | $X^1$ | R' | Fp. (oC) |
|---|---|---|---|
| II.102 | H | $4-CH_3-C_6H_4-CH_2$ | 86-88 |
| II.103 | H | $4-F-C_6H_4-CH_2$ | 79-81 |
| II.104 | H | $4-Cl-C_6H_4-CH_2$ | 105-107 |
| II.105 | H | $4-CH_3O-C_6H_4-CH_2$ | 73-76 |
| II.106 | H | $4-CF_3-C_6H_4-CH_2$ | |
| II.107 | 5-F | $4-CH_3-C_6H_4-CH_2$ | 87-90 |
| II.108 | 5-F | $4-F-C_6H_4-CH_2$ | 71-74 |
| II.109 | 5-F | $4-Cl-C_6H_4-CH_2$ | 85-87 |
| II.110 | 5-F | $4-CH_3O-C_6H_4-CH_2$ | 90-92 |
| II.111 | 5-F | $4-CF_3-C_6H_4-CH_2$ | |
| II.112 | H | 2-Thienylmethyl | 87-89 |
| II.113 | H | 3-Thienylmethyl | |
| II.114 | 5-F | 2-Thienylmethyl | 90-93 |
| II.115 | 5-F | 3-Thienylmethyl | |
| II.116 | 5-F | $3-CH_3-C_6H_4-CH_2$ | 72-75 |
| II.117 | 5-F | $2-F-C_6H_4-CH_2$ | 73-76 |
| II.118 | 5-F | $4-CH_2FO-C_6H_4-CH_2$ | Öl |

Tabelle 3: Verbindungen der Formel II''

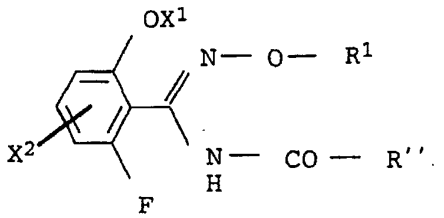

(II'')

| Nr. | $X^1$ | $X^2$ | $R^1$ | R'' | Fp.°C |
|---|---|---|---|---|---|
| II.119 | $CHF_2$ | H | $C_2H_5$ | $C_6H_5-CH_2$ | |
| II.120 | $CHF_2$ | H | $C_2H_5$ | $4-CH_3O-C_6H_4-CH_2$ | |
| II.121 | $CHF_2$ | H | $CH_2-CH=CH_2$ | $C_6H_5-CH_2$ | |
| II.122 | $CHF_2$ | H | $CH_2-C{\equiv}CH$ | $C_6H_5-CH_2$ | |
| II.123 | $CHF_2$ | H | $CH_2-C{\equiv}CH$ | $4-CH_3O-C_6H_4-CH_2$ | |
| II.124 | $CHF_2$ | H | cPr | $C_6H_5-CH_2$ | |
| II.125 | $CF_3$ | H | cPr | $C_6H_5-CH_2$ | |
| II.126 | $CHF_2$ | H | cPr | $4-F-C_6H_4-CH_2$ | 75-77 |
| II.127 | $CHF_2$ | H | cPr | $4-Cl-C_6H_4-CH_2$ | 81-83 |
| II.128 | $CHF_2$ | H | cPr | $4-CH_3O-C_6H_4-CH_2$ | 57-59 |
| II.129 | $CHF_2$ | H | cPr | $4-CF_3-C_6H_4-CH_2$ | |
| II.130 | $CHF_2$ | H | cPr | 2-Thienylmethyl | Öl |
| II.131 | $CHF_2$ | H | cPr | 3-Thienylmethyl | Öl |
| II.132 | $CHF_2$ | H | cPr | Pyrazolyl-1-methyl | |
| II.133 | $CHF_2$ | H | cPr | $4-CH_3-C_6H_4-CH_2$ | |
| II.134 | $CHF_2$ | 5-F | $CH_2-CH=CH_2$ | $C_6H_5-CH_2$ | |
| II.135 | $CHF_2$ | 5-F | $CH_2-CH=CH_2$ | $4-CH_3-C_6H_4-CH_2$ | |
| II.136 | $CHF_2$ | 5-F | $CH_2-C{\equiv}CH$ | $C_6H_5-CH_2$ | |
| II.137 | $CHF_2$ | 5-F | $CH_2-C{\equiv}CH$ | $4-CH_3O-C_6H_4-CH_2$ | |
| II.138 | $CHF_2$ | 5-F | cPr | $C_6H_5-CH_2$ | 62-65 |
| II.139 | $CHF_2$ | 5-F | cPr | $4-F-C_6H_4-CH_2$ | 64-67 |
| II.140 | $CHF_2$ | 5-F | cPr | $4-Cl-C_6H_4-CH_2$ | 72-75 |
| II.141 | $CHF_2$ | 5-F | cPr | $4-CH_3-C_6H_4-CH_2$ | 74-76 |
| II.142 | $CHF_2$ | 5-F | cPr | $4-CH_3O-C_6H_4-CH_2$ | 79-81 |
| II.143 | $CHF_2$ | 5-F | cPr | $4-CF_3-C_6H_4-CH_2$ | |
| II.144 | $CF_3$ | 5-F | cPr | $C_6H_5-CH_2$ | |
| II.145 | $CHF_2$ | 4-F | cPr | $C_6H_5-CH_2$ | |
| II.146 | $CHF_2$ | 4-F | cPr | $4-CH_3O-C_6H_4-CH_2$ | |
| II.147 | $CHF_2$ | H | cPr | $4-CH_3-C_6H_4-CH_2$ | 69-71 |

cPr steht in dieser Tabelle für Cyclopropylmethyl

Die physikalischen Daten dieser Verbindungen sowie Verfahren zu deren Herstellung sind der bereits erwähnten WO 96/19442, DE 197441098.7 und DE 19741099.5 zu entnehmen.

Das Mengenverhältnis der Verbindungen I und II kann in weiten Bereichen variiert werden; vorzugsweise werden die Wirkstoffe in einem Gewichtsverhältnis im Bereich von 20:1 bis 1:20, insbesondere 10:1 bis 1:10 eingesetzt.

Bevorzugt setzt man bei der Bereitstellung der Mischungen die reinen Wirkstoffe I und II ein, denen man weitere Wirkstoffe gegen Schadpilze oder gegen andere Schädlinge wie Insekten, Spinntiere oder Nematoden oder auch herbizide oder wachstumsregulierende Wirkstoffe oder Düngemittel beimischen kann.

Die Mischungen aus den Verbindungen I und II bzw. die Verbindungen I und II gleichzeitig, gemeinsam oder getrennt angewandt, zeichnen sich durch eine hervorragende Wirkung gegen ein breites Spektrum von pflanzenpathogenen Pilzen, insbesondere aus der Klasse der Ascomyceten, Basidiomyceten, Phycomyceten und Deuteromyceten aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen, Tomaten, Kartoffeln und Kürbisgewächse), Gerste, Gras, Hafer, Bananen, Kaffee, Mais, Obstpflanzen, Reis, Roggen, Soja, Wein, Weizen, Zierpflanzen, Zuckerrohr sowie an einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Uncinula necator an Reben, Puccinia-Arten an Getreide, Rhizoctonia-Arten an Baumwolle, Reis und Rasen, Ustilago-Arten an Getreide und Zukkerrohr, Venturia inaequalis (Schorf) an Äpfeln, Helminthosporium-Arten an Getreide, Septoria nodorum an Weizen, Botrytis cinera (Grauschimmel) an Erdbeeren, Gemüse, Zierpflanzen und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Pseudoperonospora-Arten in Hopfen und Gurken, Alternaria-Arten an Gemüse und Obst, Mycosphaerella-Arten in Bananen sowie Fusarium- und Verticillium-Arten.

Sie sind außerdem im Materialschutz (z.B. Holzschutz) anwendbar, beispielsweise gegen Paecilomyces variotii.

Die Verbindungen I und II können gleichzeitig, und zwar gemeinsam oder getrennt, oder nacheinander aufgebracht werden, wobei die Reihenfolge bei getrennter Applikation im allgemeinen keine Auswirkung auf den Bekämpfungserfolg hat.

Die Aufwandmengen der erfindungsgemäßen Mischungen liegen, vor allem bei landwirtschaftlichen Kulturflächen, je nach Art des gewünschten Effekts bei 0,01 bis 10 kg/ha, vorzugsweise 0,1 bis 5 kg/ha, insbesondere 0,2 bis 3,0 kg/ha.

Die Aufwandmengen liegen dabei für die Verbindungen I bei 0,01 bis 2,5 kg/ha, vorzugsweise 0,01 bis 10 kg/ha, insbesondere 0,05 bis 5,0 kg/ha.

Die Aufwandmengen für die Verbindungen II liegen entsprechend bei 0,01 bis 2 kg/ha, vorzugsweise 0,02 bis 2 kg/ha, insbesondere 0,02 bis 1,0 kg/ha.

Bei der Saatgutbehandlung werden im allgemeinen Aufwandmengen an Mischung von 0,001 bis 250 g/kg Saatgut, vorzugsweise 0,01 bis 100 g/kg, insbesondere 0,01 bis 50 g/kg verwendet.

Sofern für Pflanzen pathogene Schadpilze zu bekämpfen sind, erfolgt die getrennte oder gemeinsame Applikation der Verbindungen I und II oder der Mischungen aus den Verbindungen I und II durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I und II können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in bekannter Weise hergestellt, z.B. durch Verstrecken des Wirkstoffs mit Lösungsmitteln und/oder Trägerstoffen, gewünschtenfalls unter Verwendung von Emulgiermitteln und Dispergiermitteln, wobei im Falle von Wasser als Verdünnungsmittel auch andere organische Lösungsmittel als Hilfslösungsmittel verwendet werden können. Als Hilfsstoffe kommen dafür im wesentlichen in Betracht: Lösungsmittel wie Aromaten (z.B. Xylol), chlorierte Aromaten (z.B. Chlorbenzole), Paraffine (z.B. Erdölfraktionen), Alkohole (z.B. Methanol, Butanol), Ketone (z.B. Cyclohexanon), Amine (z.B. Ethanolamin, Dimethylformamid) und Wasser; Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel wie nichtionogene und anionische Emulgatoren (z.B. Polyoxyethylen-Fettalkohol-Ether, Alkylsulfonate und Arylsulfonate) und Dispergiermittel wie Ligninsulfitablaugen und Methylcellulose.

Als oberflächenaktive Stoffe kommen die Alkali-, Erdalkali-, Ammoniumsalze von aromatischen Sulfonsäuren,

z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver Streu- und Stäubemittel können durch Mischen oder gemeinsames Vermahlen der Verbindungen I oder II oder der Mischung aus den Verbindungen I und II mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I oder II bzw. der Mischung aus den Verbindungen I und II. Die Wirkstoffe werden dabei in einer Reinheit von 90% bis 100%, vorzugsweise 95% bis 100% (nach NMR- oder HPLC-Spektrum) eingesetzt.

Die Anwendung der Verbindungen I oder II, der Mischungen oder der entsprechenden Formulierungen erfolgt so, daß man die Schadpilze, deren Lebensraum oder die von ihnen freizuhaltenden Pflanzen, Samen, Böden, Flächen, Materialien oder Räume mit einer fungizid wirksamen Menge der Mischung, bzw. der Verbindungen I und II bei getrennter Ausbringung, behandelt.

Die Anwendung kann vor oder nach dem Befall durch die Schadpilze erfolgen.

Beispiele für solche Zubereitungen, welche die Wirkstoffe enthalten, sind:

I. eine Lösung aus 90 Gew.-Teilen der Wirkstoffe und 10 Gew.-Teilen N-Methylpyrrolidon, die zur Anwendung in Form kleinster Tropfen geeignet ist;

II. eine Mischung aus 20 Gew.-Teilen der Wirkstoffe, 80 Gew.-Teilen Xylol, 10 Gew.-Teilen des Anlagerungsproduktes von 8 bis 10 Mol Ethylenoxid an 1 Mol Ölsäure-N-monoethanolamid, 5 Gew.-Teilen Calciumsalz der Dodecylbenzolsulfonsäure, 5 Gew.-Teilen des Anlagerungsproduktes von 40 Mol Ethylenoxid an 1 Mol Ricinusöl; durch feines Verteilen der Lösung in Wasser erhält man eine Dispersion;

III.eine wäßrige Dispersion aus 20 Gew.-Teilen der Wirkstoffe, 40 Gew.-Teilen Cyclohexanon, 30 Gew.-Teilen Isobutanol, 20 Gew.-Teilen des Anlagerungsproduktes von 40 Mol Ethylenoxid an 1 Mol Ricinusöl;

IV. eine wäßrige Dispersion aus 20 Gew.-Teilen der Wirkstoffe, 25 Gew.-Teilen Cyclohexanol, 65 Gew.-Teilen einer Mineralölfraktion vom Siedepunkt 210 bis 280°C und 10 Gew.-Teilen des Anlagerungsproduktes von 40 Mol Ethylenoxid an 1 Mol Ricinusöl;

V. eine in einer Hammermühle vermahlene Mischung aus 80 Gew.-Teilen der Wirkstoffe, 3 Gew.-Teilen des Natriumsalzes der Diisobutylnaphthalin-l-sulfonsäure, 10 Gew.-Teilen des Natriumsalzes einer Ligninsulfonsäure aus einer Sulfitablauge und 7 Gew.-Teilen pulverförmigem Kieselsäuregel; durch feines Verteilen der Mischung in Wasser erhält man eine Spritzbrühe;

VI. eine innige Mischung aus 3 Gew.-Teilen der Wirkstoffe und 97 Gew.-Teilen feinteiligem Kaolin; dieses Stäubemittel enthält 3 Gew.-% Wirkstoff;

VII.eine innige Mischung aus 30 Gew.-Teilen der Wirkstoffe, 92 Gew.-Teilen pulverförmigem Kieselsäuregel und 8 Gew.-Teilen Paraffinöl, das auf die Oberfläche dieses Kieselsäuregels gesprüht wurde; diese Aufbereitung gibt dem Wirkstoff eine gute Haftfähigkeit;

VIII.eine stabile wäßrige Dispersion aus 40 Gew.-Teilen der WirkStoffe, 10 Gew.-Teilen des Natriumsalzes eines Phenolsulfonsäure-Harnstoff-Formaldehyd-Kondensates, 2 Gew.-Teilen Kieselgel und 48 Gew.-Teilen Wasser, die weiter verdünnt werden kann;

IX. eine stabile ölige Dispersion aus 20 Gew.-Teilen der Wirkstoffe, 2 Gew.-Teilen des Calciumsalzes der Dodecylbenzolsulfonsäure, 8 Gew.-Teilen Fettalkohol-polyglykolether, 20 Gew.-Teilen des Natriumsalzes eines Phenolsulfonsäure-Harnstoff-Formaldehydkondensates und 88 Gew.-Teilen eines paraffinischen Mineralöls.

Anwendungsbeispiele

Die synergistische Wirkung der erfindungsgemäßen Mischungen läßt sich durch die folgenden Versuche zeigen:

Die Wirkstoffe werden getrennt oder gemeinsam als 10%ige Emulsion in einem Gemisch aus 63 Gew.-% Cyclohexanon und 27 Gew.-% Emulgator aufbereitet und entsprechend der gewünschten Konzentration mit Wasser verdünnt.

Die Auswertung erfolgte durch Feststellung der befallenen Blattflächen in Prozent. Diese Prozent-Werte wurden in Wirkungsgrade umgerechnet. Der Wirkungsgrad (**W**) wird nach der Formel von Abbot wie folgt bestimmt:

$$W = (1 - \alpha/\beta)\cdot 100$$

$\alpha$ entspricht dem Pilzbefall der behandelten Pflanzen in % und

$\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 wiesen die behandelten Pflanzen keinen Befall auf.

Die zu erwartenden Wirkungsgrade der Wirkstoffmischungen wurden nach der Colby Formel [R.S. Colby, Weeds 15, 20-22 (1967)] ermittelt und mit den beobachteten Wirkungsgraden verglichen.

$$\text{Colby Formel: } E = x + y - x\cdot y/100$$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b.

Anwendungsbeispiel 1 - Wirksamkeit gegen Weizenmehltau

Blätter von in Töpfen gewachsenen Weizenkeimlingen der Sorte "Kanzler" wurden mit wäßriger Wirkstoffaufbereitung, die mit einer Stammlösung aus 10 % Wirkstoff, 63 % Cyclohexanon und 27 % Emulgiermittel angesetzt wurde, bis zur Tropfnässe besprüht und 24 h nach dem Antrocknen des Spritzbelags mit Sporen des weizenmehltaus (Erysiphe graminis forma specialis tritici) bestäubt. Anschließend wurden die Versuchspflanzen in Klimakammern bei 20 - 24° C und 60 - 90 % relativer Luftfeuchtigkeit für 7 Tage aufgestellt. Dann wurde das Ausmaß der Befallsentwicklung auf den Blättern visuell ermittelt

Die visuell ermittelten Werte für den Prozentanteil befallener Blattflächen wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der Colby-Formel (Colby, S. R. (Calculating synergistic and antagonistic responses of herbicide Combinations", Weeds, 15, S. 20 - 22, 1967) ermittelt und mit den beobachteten Wirkungsgraden verglichen.

Als Komponente II wurden die Verbindungen 11.79 bzw. II.138 aus TAbelle 2 eingesetzt.

Die Ergebnisse der Versuche sind den nachstehenden Tabellen 1 und 2 zu entnehmen:

Tabelle 1:

| Bsp. | Wirkstoff | Konz. in ppm | Wirkungsgrad in % der unbeh. Kontrolle |
|---|---|---|---|
| 1V | ohne | (67 % Befall) | 0 |
| 2V | Verbindung II.79 | 1<br>0,25 | 55<br>55 |
| 3V | Verbindung I.a (common name: Fenpropimorph) | 0,25 | 55 |
| 4V | Verbindung I.b (common name: Fenpropidin) | 0,25 | 55 |
| 5V | Verbindung I.c (common name: Tridemorph) | 1<br>0,25 | 0<br>0 |

Tabelle 2:

| Bsp. | erfindungsgemäße Mischung (Konz. in ppm) | beobachteter Wirkungsgrad | berechneter Wirkungsgrad* |
|---|---|---|---|
| 6 | 0,25 ppm Ia + 0,25 ppm II.79 | 96 | 80 |
| 7 | 1 ppm Ic + 1 ppm II.79 | 85 | 55 |
| 8 | 0,25 ppm Ic + 0,25 ppm II.79 | 90 | 55 |
| 9 | 0,25 ppm Ib + 0,25 ppm II.79 | 93 | 80 |

* berechnet nach der Colby-Formel

Aus den Ergebnissen der Versuche geht hervor, daß der beobachtete Wirkungsgrad in allen Mischungsverhältnissen höher ist als der nach der Colby-Formel vorausberechnete Wirkungsgrad.

**Patentansprüche**

**1.** Fungizide Mischungen, enthaltend als aktive Komponenten

a) ein Morpholin- bzw. Piperidinderivat I ausgewählt aus der Gruppe der Verbindungen Ia, Ib, Ic und Id

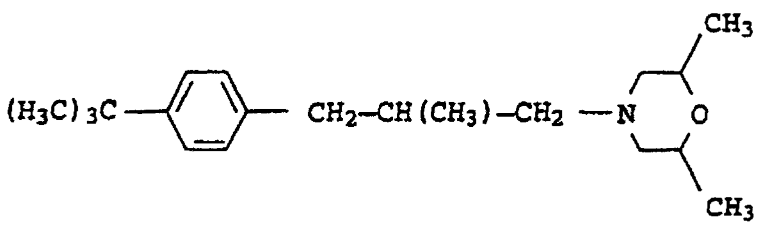

(Ia)

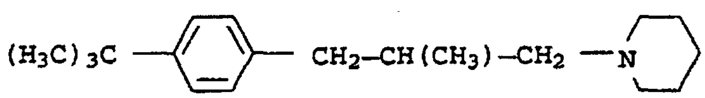

(Ib)

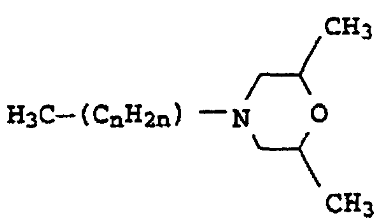

(Ic)

[n= 10,11,12 (60 - 70 %) oder 13]

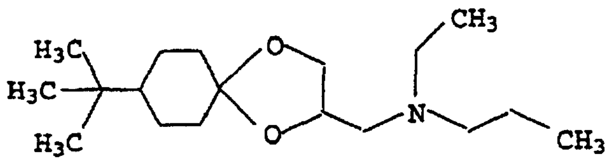

Id

und

b) Verbindungen der Formel II

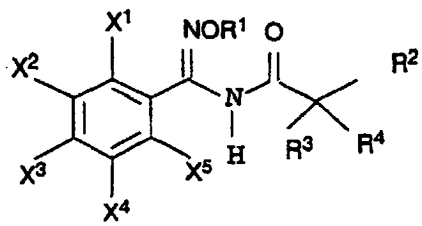

(II)

wobei die Substituenten $X^1$ bis $X^5$ und $R^1$ bis $R^4$ folgende Bedeutung haben:

$X^1$ $C_1$-$C_4$-Halogenalkyl, $C_1$-$C_4$-Halogenalkoxy oder Halogen;

$X^2$ bis $X^5$ unabhängig voneinander Wasserstoff, Halogen, $C_1$-$C_4$-Alkyl, $C_1$-$C_4$-Halogenalkyl, $C_1$-$C_4$-Alkoxy oder $C_1$-$C_4$-Halogenalkoxy,

$R^1$ $C_1$-$C_4$-Alkyl, $C_2$-$C_6$-Alkenyl, $C_2$-$C_6$-Alkinyl, $C_1$-$C_4$-Alkyl-$C_3$-$C_7$-Cycloalkyl, wobei diese Reste Substituenten ausgewählt aus Halogen, Cyano, und $C_1$-$C_4$-Alkoxy tragen können

R2 einen Phenylrest oder einen 5- oder 6-gliedrigen gesättigten oder ungesättigten Heterocyclylrest mit mindestens einem Heteroatom ausgewählt aus der Gruppe N, O und S, wobei die cyclischen Reste einen bis drei Substituenten ausgewählt aus der Gruppe aus Halogen, $C_1$-$C_4$-Alkyl, $C_1$-$C_4$-Alkoxy, $C_1$-$C_4$-Halogenalkyl, $C_1$-$C_4$-Halogenalkoxy, $C_1$-$C_4$-Alkoxy-$C_2$-$C_4$-Alkenyl, $C_1$-$C_4$-Alkoxy-$C_2$-$C_4$-Alkinyl aufweisen können,

$R^3$ und $R^4$ unabhängig voneinander Wasserstoff, $C_1$-$C_4$-Alkyl, $C_1$-$C_4$-Alkoxy, $C_1$-$C_4$-Alkylthio, N-$C_1$-$C_4$-Alkylamino, $C_1$-$C_4$-Halogenalkyl oder $C_1$-$C_4$-Halogenalkoxy

in einer synergistisch wirksamen Menge.

**2.** Fungizide Mischungen nach Anspruch 1, wobei bei Verbindungen II $R^1$ $C_1$-$C_4$-Alkyl oder $C_1$-$C_4$-Alkylen-$C_3$-$C_7$-cycloalkyl bedeutet.

**3.** Fungizide Mischungen nach Anspruch 1, wobei bei Verbindungen II $R^2$ Phenyl, Thienyl, Pyrazolyl, Pyrrolyl, Imidazolyl, Thiazolyl, Furyl, Pyridazinyl oder Pyrimidinyl bedeutet, und diese Reste durch Halogen, $C_1$-$C_4$-Alkoxy oder $C_1$-$C_4$-Alkyl substituiert sein können.

**4.** Fungizide Mischungen nach Anspruch 1, wobei bei Verbindungen II $R^3$ oder $R^4$ Wasserstoff, Fluor, Chlor, Methyl, Ethyl, Methoxy, Thiomethyl, oder N-Methyamino bedeuten.

**5.** Fungizide Mischungen nach Anspruch 1, wobei bei Verbindungen II $X^1$ Halogen-$C_1$-$C_4$-alkyl, Halogen-$C_1$-$C_4$-alkoxy oder Halogen bedeutet.

**6.** Fungizide Mischungen nach Anspruch 1, wobei bei Verbindungen II $X^2$ oder $X^3$ Wasserstoff oder Halogen bedeuten.

**7.** Fungizide Mischungen nach Anspruch 1, wobei bei Verbindungen II $X^4$ Wasserstoff, Chlor, Fluor, Methoxy, Ethoxy, Trifluormethyl oder Trifluormethoxy bedeutet.

**8.** Fungizide Mischungen nach Anspruch 1, wobei bei Verbindungen II $X^5$ Wasserstoff, Chlor, Fluor, Methoxy, Ethoxy, Trifluormethyl oder Trifluormethoxy bedeutet.

**9.** Fungizide Mischung nach einem der vorhergehenden Ansprüche. welche in zwei Teilen konditioniert ist, wobei der eine Teil eine oder mehrere Verbindungen I in einem festen oder flüssigen Träger enthält und der andere Teil eine oder mehrere Verbindungen der Formel II in einem festen oder flüssigen Träger enthält.

**10.** Verfahren zur Bekämpfung von Schadpilzen, **dadurch gekennzeichnet, daß** man die Pilze, deren Lebensraum oder die vor Pilzbefall zu schützenden Materialien, Pflanzen, Samen, Böden, Flächen oder Räume mit einer fungiziden Mischung gemäß einem der Ansprüche 1 bis 9 behandelt, wobei die Anwendung der Verbindungen I und einer oder mehrerer Verbindungen der Formeln II gleichzeitig, und zwar gemeinsam oder getrennt, oder nacheinander erfolgen kann.

## Claims

**1.** A fungicidal mixture, comprising as active components

a) a morpholine or piperidine derivative I selected from the group of the compounds Ia, Ib, Ic and Id

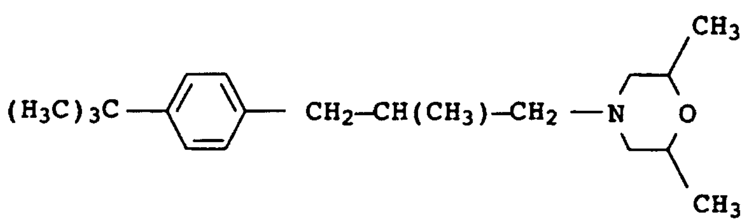

(Ia)

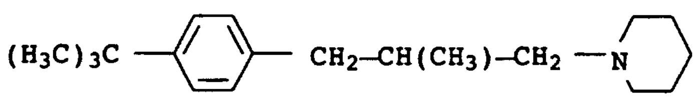

(Ib)

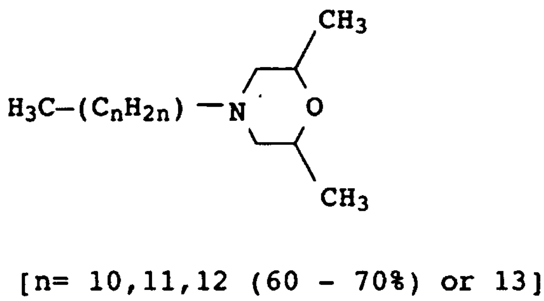

(Ic)

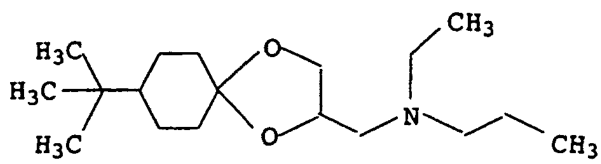

Id

and

b) compounds of the formula II

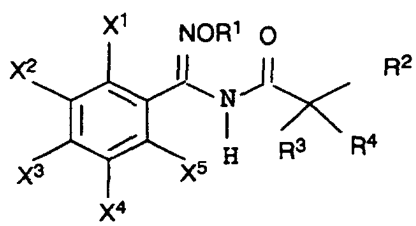

(II)

where the substituents $X^1$ to $X^5$ and $R^1$ to $R^4$ are as defined below:

| | |
|---|---|
| $X^1$ | is $C_1$-$C_4$-haloalkyl, $C_1$-$C_4$-haloalkoxy or halogen; |
| $X^2$ to $X^5$ | are, independently of one another, hydrogen, halogen, $C_1$-$C_4$-alkyl, $C_1$-$C_4$-haloalkyl, $C_1$-$C_4$-alkoxy or $C_1$-$C_4$-haloalkoxy, |
| $R^1$ | is $C_1$-$C_4$-alkyl, $C_2$-$C_6$-alkenyl, $C_2$-$C_6$-alkynyl, $C_1$-$C_4$-alkyl-$C_3$-$C_7$-cycloalkyl, where these radicals may carry substituents selected from the group consisting of halogen, cyano and $C_1$-$C_4$-alkoxy, |
| R2 | is a phenyl radical or a 5- or 6-membered saturated or unsaturated heterocyclyl radical having at least one heteroatom selected from the group consisting of N, O and S, where the cyclic radicals may have one to three substituents selected from the group consisting of halogen, $C_1$-$C_4$-alkyl, $C_1$-$C_4$-alkoxy, $C_1$-$C_4$-haloalkyl, $C_1$-$C_4$-haloalkoxy, $C_1$-$C_4$-alkoxy-$C_2$-$C_4$-alkenyl, $C_1$-$C_4$-alkoxy-$C_2$-$C_4$-alkynyl, |
| $R^3$ and $R^4$ | are, independently of one another, hydrogen, $C_1$-$C_4$-alkyl, $C_1$-$C_4$-alkoxy, $C_1$-$C_4$-alkylthio, N-$C_1$-$C_4$-alkylamino, $C_1$-$C_4$-haloalkyl or $C_1$-$C_4$-haloalkoxy |

in a synergistically effective amount.

**2.** A fungicidal mixture as claimed in claim 1, where in the compounds II $R^1$ is $C_1$-$C_4$-alkyl or $C_1$-$C_4$-alkylene-$C_3$-$C_7$-cycloalkyl.

**3.** A fungicidal mixture as claimed in claim 1, where in the compounds II $R^2$ is phenyl, thienyl, pyrazolyl, pyrrolyl, imidazolyl, thiazolyl, furyl, pyridazinyl or pyrimidinyl and these radicals may be substituted by halogen, $C_1$-$C_4$-alkoxy or $C_1$-$C_4$-alkyl.

**4.** A fungicidal mixture as claimed in claim 1, where in the compounds II $R^3$ or $R^4$ is hydrogen, fluorine, chlorine, methyl, ethyl, methoxy, thiomethyl or N-methylamino.

**5.** A fungicidal mixture as claimed in claim 1, where in the compounds II $X^1$ is halo-$C_1$-$C_4$-alkyl, halo-$C_1$-$C_4$-alkoxy or halogen.

**6.** A fungicidal mixture as claimed in claim 1, where in the compounds II $X^2$ or $X^3$ is hydrogen or halogen.

**7.** A fungicidal mixture as claimed in claim 1, where in the compounds II $X^4$ is hydrogen, chlorine, fluorine, methoxy, ethoxy, trifluoromethyl or trifluoromethoxy.

**8.** A fungicidal mixture as claimed in claim 1, where in the compounds II $X^5$ is hydrogen, chlorine, fluorine, methoxy, ethoxy, trifluoromethyl or trifluoromethoxy.

**9.** A fungicidal mixture as claimed in any one of the preceding claims, which is conditioned in two parts, where one part comprises one or more compounds I in a solid or liquid carrier and the other part comprises one or more compounds of the formula II in a solid or liquid carrier.

**10.** A method for controlling harmful fungi, which comprises treating the fungi, their habitat or the materials, plants, seeds, soils, areas or spaces to be protected against fungal attack with a fungicidal mixture as claimed in any of claims 1 to 9, where the compounds I and one or more compounds of the formula II can be applied simultaneously, that is either together or separately, or successively.

**Revendications**

**1.** Mélanges fongicides contenant en tant que composant actifs

a) un dérivé de la morpholine ou de la pipéridine I choisi dans le groupe des composés Ia, Ib, Ic et Id

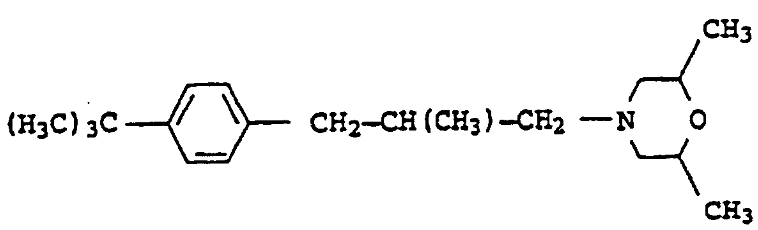

(Ia)

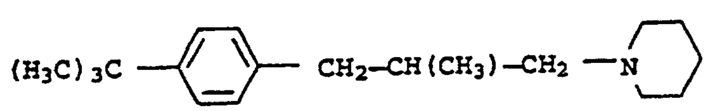

(Ib)

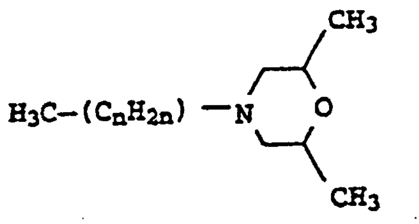

(Ic)

[n = 10, 11, 12 (60 à 70 %) ou 13]

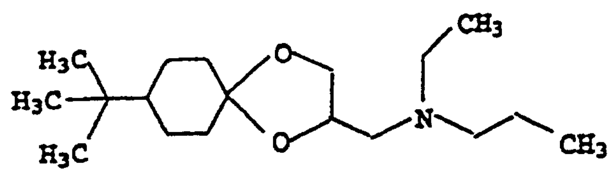

Id

et

b) des composés de formule II

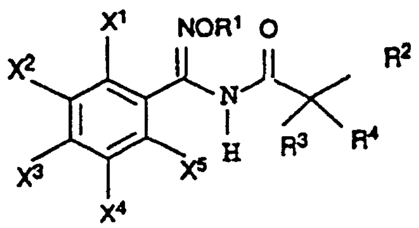

(II)

dans laquelle les symboles $X^1$ et $X^5$ et $R^1$ à $R^4$ ont les significations suivantes :

$X^1$ : un groupe halogénoalkyle en C1-C4, halogénoalcoxy en C1-C4 ou un halogène ;

$X^1$ à $X^5$, chacun indépendamment les uns des autres : l'hydrogène, un halogène, un groupe alkyle en C1-C4, halogénoalkyle en C1-C4, alcoxy en C1-C4 ou halogénoalcoxy en C1-C4,

$R^1$ : un groupe alkyle en C1-C4, alcényle en C2-C6, alcynyle en C2-C6, (alkyle en C1-C4)-cycloalkyle en C3-C7, ces groupes pouvant porter des substituants choisis parmi les halogènes, les groupes cyano et alcoxy en C1-C4,

$R^2$ : un groupe phényle ou un groupe hétérocyclyle saturé ou insaturé à cinq ou six chaînons contenant au moins un hétéroatome choisi parmi N, O et S, les radicaux cycliques pouvant porter un à trois susbtituants choisis parmi les halogènes, les groupes alkyle en C1-C4, alcoxy en C1-C4, halogénoalkyle en C1-C4, halogénoalcoxy en C1-C4, (alcoxy en C1-C4)alcényle en C2-C4, (alcoxy en C1-C4)alcynyle en C2-C4,

$R^3$ et $R^4$, chacun indépendamment l'un de l'autre, l'hydrogène, un groupe alkyle en C1-C4, alcoxy en C1-C4, alkylthio en C1-C4, N-alkylamino en C1-C4, halogénoalkyle en C1-C4 ou halogénoalcoxy en C1-C4,

en quantité synergétique efficace.

2. Mélanges fongicides selon la revendication 1, pour lesquels, dans les composés II, $R^1$ représente un groupe alkyle en C1-C4 ou (alkylène en C1-C4)cycloalkyle en C3-C7.

3. Mélanges fongicides selon la revendication 1 pour lesquels, dans les composés II, $R^2$ représente un groupe phényle, thiényle, pyrazolyle, pyrrolyle, imidazolyle, thiazolyle, furyle, pyridazinyle ou pyrimidinyle, ces groupes pouvant être substitués par des halogènes, des groupes alcoxy en C1-C4 ou alkyle en C1-C4.

4. Mélanges fongicides selon la revendication 1, dans lesquels, pour les composés II, $R^3$ ou $R^4$ représente l'hydrogène, le fluor, le chlore, un groupe méthyle, éthyle, méthoxy, thiométhyle ou N-méthylamino.

5. Mélanges fongicides selon la revendication 1, pour lesquels, dans les composés II, $X^1$ représente un groupe halogénoalkyle en C1-C4, halogénoalcoxy en C1-C4 ou halogène.

6. Mélanges fongicides selon la revendication 1, pour lesquels, dans les composés II, $X^2$ ou $X^3$ représente l'hydrogène ou un halogène.

7. Mélanges fongicides selon la revendication 1, pour lesquels, dans les composés II, $X^4$ représente l'hydrogène, le chlore, le fluor, un groupe méthoxy, éthoxy, trifluorométhyle ou trifluorométhoxy.

8. Mélanges fongicides selon la revendication 1, pour lesquels, dans les composés II, $X^5$ représente l'hydrogène, le chlore, le fluor, un groupe méthoxy, éthoxy, trifluorométhyle ou trifluorométhoxy.

9. Mélange fongicide selon l'une des revendications qui précèdent, conditionné en deux parties, l'une d'elles contenant un ou plusieurs composés I dans un véhicule solide ou liquide et l'autre un ou plusieurs composés de formule II dans un véhicule solide ou liquide.

10. Procédé pour combattre les mycètes nuisibles, **caractérisé par le fait que** l'on traite les mycètes, leur habitat ou les matériaux, végétaux, semences, sols, aires ou locaux qu'on veut protéger contre l'attaque par les mycètes par un mélange fongicide selon les revendications 1 à 9, les composés I et un ou plusieurs composés de formule II étant appliqués en même temps, ensemble ou séparément, ou successivement.